(19) Europäisches Patentamt
European Patent Office
Office européen des brevets

(11) **EP 2 335 029 B1**

(12) **EUROPÄISCHE PATENTSCHRIFT**

(45) Veröffentlichungstag und Bekanntmachung des Hinweises auf die Patenterteilung:
**18.01.2017 Patentblatt 2017/03**

(21) Anmeldenummer: **09781180.6**

(22) Anmeldetag: **28.07.2009**

(51) Int Cl.:
***G01D 5/347*** *(2006.01)*

(86) Internationale Anmeldenummer:
**PCT/EP2009/059731**

(87) Internationale Veröffentlichungsnummer:
**WO 2010/028909 (18.03.2010 Gazette 2010/11)**

(54) **OPTISCHE POSITIONSMESSEINRICHTUNG**

OPTICAL POSITION MEASURING DEVICE

DISPOSITIF DE MESURE DE POSITION OPTIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **11.09.2008 DE 102008046793**

(43) Veröffentlichungstag der Anmeldung:
**22.06.2011 Patentblatt 2011/25**

(73) Patentinhaber: **Dr. Johannes Heidenhain GmbH 83301 Traunreut (DE)**

(72) Erfinder:
• **HOLZAPFEL, Wolfgang**
  **83119 Obing (DE)**
• **LINGK, Christoph**
  **83278 Traunstein (DE)**
• **VOGT, Gerhard**
  **81379 München (DE)**

(56) Entgegenhaltungen:
**EP-A- 0 096 448      EP-A- 0 801 724
WO-A-2007/129022**

**Beschreibung**

Die vorliegende Erfindung betrifft eine optische Positionsmesseinrichtung.

Optische Positionsmesseinrichtungen sind z.B. aus der EP 801 724 B1 oder aber aus der EP 1 477 774 A1 bekannt. Diese umfassen jeweils eine Maßverkörperung sowie eine relativ hierzu in mindestens einer Messrichtung bewegliche Abtasteinheit. Auf Seiten der Abtasteinheit sind eine Lichtquelle sowie eine Detektoranordnung vorgesehen, wobei sich die Detektoranordnung entlang einer definierten Anordnungsrichtung bzw. Linie erstreckt. Im Fall einer Linear-Maßverkärperung erstreckt sich die Detektoranordnung entlang einer gekrümmten Anordnungsrichtung, im Fall einer Winkel-Maßverkörperung erstreckt sich die Detektoranordnung entlang einer linearen Anordnungsrichtung; in der EP 1 477 774 A1 ist zudem der Fall erwähnt, dass sich die Detektoranordnung im Fall einer abgetasteten WinkelMaßverkörperung mit einer ersten Krümmung entlang einer Linie mit einer zweiten Krümmung erstreckt, die unterschiedlich zur ersten Krümmung ist. Über die Abtastung der jeweiligen Maßverkörperung wird ein Streifenmuster erzeugt, das bei einer resultierenden Relativbewegung von Maßverkörperung und Abtasteinheit periodisch moduliert und über die Detektoranordnung in verschiebungsabhängige Positionssignale umgewandelt wird. Die derart erzeugten Positionssignale können in einer nachgeordneten Folgeelektronik beispielsweise zur Bewegungssteuerung in einer Maschine weiterverarbeitet werden.

Bei einer optischen Abtastung einer Linear-Maßverkörperung resultiert üblicherweise ein sich linear bzw. entlang einer ersten Geraden erstreckendes Streifenmuster, im Fall der Abtastung einer Winkel-Maßverkörperung ein winklig orientiertes bzw. sich entlang einer gekrümmten Linie erstreckendes Streifenmuster. Die EP 801 724 B1 sowie die EP 1 477 774 A1 offenbaren verschiedene Möglichkeiten, wie ein sich linear erstreckendes Streifenmuster in ein sich entlang der gekrümmten Anordnungsrichtung der Detektoranordnung erstreckendes Streifenmuster überführt werden kann und umgekehrt. Dies ist etwa gemäß der EP 801 724 B1 mit Hilfe eines speziell ausgebildeten weiteren Gitters im Abtaststrahlengang möglich oder aber gemäß der EP 1 477 774 A1 mittels eines geeignet ausgebildeten Mikrolinsenarrays; letztere Druckschrift offenbart im übrigen auch noch den allgemeinen Fall, wie ein sich entlang einer ersten gekrümmten Linie erstreckendes Streifenmuster in ein sich entlang einer zweiten gekrümmten Linie erstreckendes Streifenmuster überführt werden kann, wobei sich die Krümmungen der ersten und zweiten Linie unterscheiden.

Motiviert ist eine derartige Transformation des aus einer bestimmten Abtastanordnung resultierenden Streifenmusters in ein anderes Streifenmuster beispielsweise dadurch, dass detektionsseitig oftmals eine bestimmte Ausgestaltung einer Detektoranordnung in einem sog. Opto-ASIC vorgegeben ist. Da ein Neu-Design eines derartigen Opto-ASICs üblicherweise relativ aufwendig ist, sollten vorhandene Opto-ASICs ohne größeren Anpassungsaufwand auch in möglichst vielen anderen Anwendungen eingesetzt werden. Beispielsweise sollte ein für die Abtastung von Winkel-Maßverkörperungen ausgelegter Opto-ASIC möglichst auch für die Abtastung einer Linear-Maßverkörperung verwendbar sein und umgekehrt etc..

Eine rotatorische optische Positionsmesseinrichtung ist aus der WO 2007/129022 A1 bekannt. Zur idealen Einstellung des aus der Abtastung einer Radialteilung resultierenden Streifenmusters auf die strukturierte Detektoranordnung, wird in dieser Druckschrift vorgeschlagen, den Abtastkopf und damit die Detektionsebene gegenüber der Radialteilung zu verkippen. Für die Erzeugung des Streifenmusters wird hierbei ein Abtastprinzip genutzt, bei dem der Lichtquelle ein Index-Gitter vorgeordnet wird.

Eine weitere rotatorische optische Positionsmesseinrichtung ist in der EP 0 096 448 A offenbart. Zur Transformation eines radialen Streifenmusters in ein paralleles Streifenmuster wird eine zusätzlich im Abtaststrahlengang angeordnete Transformationsoptik genutzt. Damit sind zusätzliche Bauteile erforderlich, die ferner problematisch bei einer weiteren Miniaturisierung des Gesamtsystems sind.

Aufgabe der vorliegenden Erfindung ist es, eine optische Positionsmesseinrichtung anzugeben, die eine gegenüber dem Stand der Technik nochmals vereinfachte Möglichkeit zur Transformation eines aus der Abtastung einer Maßverkörperung resultierenden Streifenmusters ermöglicht, wobei sich die Maßverkörperung entlang einer ersten Geraden erstreckt. Das Streifenmuster soll hierbei in ein sich entlang einer zweiten Linie erstreckendes Streifenmuster transformiert werden, wobei die Krümmung der zweiten Linie unterschiedlich zur Krümmung der ersten Geraden ist.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtungen ergeben sich aus den Maßnahmen in den abhängigen Ansprüchen.

Erfindungsgemäß ist nunmehr vorgesehen, dass zur Transformation des Streifenmusters die Maßverkörperungsebene und die Detektionsebene nicht-parallel zueinander, d.h. verkippt zueinander angeordnet werden.

Gegenüber dem Stand der Technik resultiert somit eine nochmals vereinfachte Transformationsmöglichkeit, die insbesondere keine zusätzlichen bzw. speziell ausgebildeten optischen Elemente im Abtaststrahlengang erfordert. Durch das definierte Verkippen der Detektionsebene gegenüber der Maßverkörperungsebene lässt sich die gewünschte Transformation des erzeugten Streifenmusters in ein zur Abtastung durch die jeweilige Detektoranordnung geeignetes Streifenmuster bewerkstelligen. Der universelle Einsatz von Detektoranordnungen bzw. Opto-ASICs für optische Positionsmesseinrichtungen mit Linear- als auch mit Winkel-Maßverkörperungen ist möglich.

Über das erfindungsgemäße Verkippen der Detektionsebene gegenüber der Maßverkörperungsebene kann demzufolge ein Streifenmuster, das aus der Abtastung einer Maßverkörperung, die sich entlang einer ersten Geraden oder einer ersten gekrümmten Linie erstreckt in ein Streifenmuster erfolgen, das sich entlang einer zweiten Linie erstreckt, deren Krümmung sich von der ersten Linie unterscheidet. Entlang der zweiten Linie erstreckt sich hierbei die Detektoranordnung in der Detektionsebene.

Beispielsweise kann etwa im Fall einer abgetasteten Linear-Maßverkörperung durch geeignetes Verkippen der Detektionsebene vorgesehen werden, ein winkliges Streifenmuster zu erzeugen, das mittels einer gekrümmten Detektoranordnung erfasst wird.

In Bezug auf die erfindungsgemäße optische Positionsmesseinrichtung, gibt es vielfältige Ausführungsmöglichkeiten.

So ist vorgesehen dass die Maßverkörperung als Linear-Maßverkörperung ausgebildet ist, die sich entlang der ersten Geraden erstreckt und die Detektoranordnung sich entlang der gekrümmten zweiten Linie erstreckt, so dass eine Transformation eines aus der Abtastung der Linear-Maßverkörperung resultierenden Streifenmusters in ein sich entlang der gekrümmten zweiten Linie erstreckendes Streifenmuster erfolgt.

Es ist ferner möglich, dass die Lichtquelle derart angeordnet ist, dass ein von der Lichtquelle emittierter Zentralstrahl lotrecht auf die Maßverkörperung auftrifft.

Alternativ hierzu kann die Lichtquelle derart angeordnet sein, dass ein von der Lichtquelle emittierter Zentralstrahl nicht-lotrecht auf die Maßverkörperung auftrifft.

Die Detektionsebene wird gegenüber der Maßverkörperungsebene um einen definierten Verkippwinkel verkippt angeordnet, wobei der Verkippwinkel als Winkel zwischen der tatsächlichen Detektionsebene und einer Ebene definiert ist, in der die Detektionsebene parallel zur Maßverkörperungsebene angeordnet wäre.

Der nötige Verkippwinkel ergibt sich aus der Beziehung

$$\sin\alpha = \frac{a_2 - a_1}{L},$$

mit:

$\alpha$ := Verkippwinkel

$a_1$ := lotrechter Abstand von der der Maßverkörperung nächstgelegenen Kante der Detektoranordnung auf die Maßverkörperungsebene $a_2$ := lotrechter Abstand von der der Maßverkörperung am weitesten entfernten Kante der Detektoranordnung auf die Maßverkörperungsebene

$L$ := Ausdehnung der Detektoranordnung senkrecht zur Messrichtung

Bei einer vorgegebenen Geometrie und Anordnung der Detektoranordnung ergibt sich die Teilungsperiode einer Linear-Maßverkörperung gemäß

$$d = b \cdot \frac{c_2}{b + a_2},$$

mit:

$d$ := Teilungsperiode der Linear-Maßverkörperung

$b$ := Abstand der Lichtquelle lotrecht auf die Linear-Maßverkörperung

$c_2$ := Ausdehnung in Messrichtung der von der Lichtquelle am weitesten entfernt liegenden Kante eines zu einem Teilungsbereich zugehörigen Bereichs auf der Detektoranordnung

$a_2$ := lotrechter Abstand von der der Linear-Maßverkörperung am weitest entfernten Kante der Detektoranordnung auf die Maßverkörperungsebene

Hierbei ergibt sich der lotrechte Abstand von der der Linear-Maßverkörperung nächstgelegenen Kante der Detektoranordnung auf die Maßverkörperungsebene bei einer vorgegebenen Geometrie und Anordnung der Detektoranordnung gemäß

$$a_1 = b \cdot \frac{c_1}{d} - b,$$

mit:

$a_1$ := lotrechter Abstand von der der Linear-Maßverkörperung nächstgelegenen Kante der Detektoranordnung auf die Maßverkörperungsebene

b := Abstand der Lichtquelle lotrecht auf die Linear-Maßverkörperung

$c_1$ := Ausdehnung in Messrichtung der der Lichtquelle am nächsten benachbarten Kante eines zu einem Teilungsbereich zugehörigen Bereichs der Detektoranordnung

d := Teilungsperiode der Linear-Maßverkörperung

Bei einer vorgegebenen Geometrie und Anordnung der Detektoranordnung ergibt sich die Länge der Sehne des Bogensegments auf der innen- oder außenliegenden Seite der Winkel-Maßverkörperung gemäß

$$s'_i = b \cdot \frac{c}{b + a_i},$$

wobei i =1, 2, und mit

c := Breite eines einem Teilungsbereich zugehörigem Bereichs auf der Detektoranordnung

$a_1$ := lotrechter Abstand von der der Winkel-Maßverkörperung nächstgelegener Kante der Detektoranordnung auf die Maßverkörperungsebene

$a_2$ := lotrechter Abstand von der der Winkel-Maßverkörperung am weitesten entfernte Kante der Detektoranordnung auf die Maßverkörperungsebene

$s'_1$ := Länge der Sehne des Bogensegments auf der innen liegenden Seite der Winkel-Maßverkörperung

$s'_2$ := Länge der Sehne des Bogensegments auf der außen liegenden Seite der Winkel-Maßverkörperung

Die Detektoranordnung umafasst eine Mehrzahl einzelner, identisch ausgebildeter Detektorelemente, welche entlang der zweiten Linie periodisch angeordnet sind.

Hierbei ist vorzugsweise die Maßverkörperungsebene und die Detektionsebene dergestalt nicht-parallel zueinander angeordnet sind, dass der Modulationsgrad der über die Mehrzahl von Detektorelementen erfassten Signale möglichst gleich ist.

Es ist möglich, dass die Lichtquelle ein divergentes Lichtbündel emittiert. Ferner kann die Maßverkörperung als Durchlicht-Maßverkörperung oder als Reflexions-Maßverkörperung ausgebildet sein.

Weitere Einzelheiten und Vorteile der vorliegenden Erfindung seien anhand der nachfolgenden Beschreibung von Ausführungsbeispielen erfindungsgemäßer optischer Positionsmesseinrichtungen in Verbindung mit den Figuren erläutert.

Es zeigt

Figur 1     eine schematische Darstellung zur Erläuterung des Zentralprojektionsprinzips;

Figur 2     eine schematische Darstellung zur Erläuterung geometrischer Größen eines ersten Ausführungsbeispiels einer erfindungsgemäßen optischen Positionsmesseinrichtung;

Figur 3     unterschiedliche, stark-schematisierte Ansichten mit wichtigen Komponenten des ersten Ausführungsbeispiels einer erfindungsgemäßen optischen Positionsmesseinrichtung;

Figur 4     eine schematisierte räumliche Darstellung des ersten Ausführungsbeispiels der erfindungsgemäßen optischen Positionsmesseinrichtung;

Figur 5     eine weitere schematisierte Teilansicht des ersten Ausführungsbeispiels der erfindungsgemäßen optischen Positionsmesseinrichtung;

Figur 6     eine Darstellung des transformierten Streifenmusters in der Detektionsebene des ersten Ausführungsbeispiels der erfindungsgemäßen optischen Positionsmesseinrichtung;

Figur 7    unterschiedliche, stark-schematisierte Ansichten mit wichtigen Komponenten eines zweiten Ausführungsbeispiels der erfindungsgemäßen optischen Positionsmesseinrichtung;

Figur 8    unterschiedliche, stark-schematisierte Ansichten mit wichtigen Komponenten eines dritten Ausführungsbeispiels der erfindungsgemäßen optischen Positionsmesseinrichtung;

Figur 9    unterschiedliche, stark-schematisierte Ansichten mit wichtigen Komponenten eines vierten Ausführungsbeispiels der erfindungsgemäßen optischen Positionsmesseinrichtung;

Figur 10    eine schematische Darstellung zur Erläuterung geometrischer Größen des vierten Ausführungsbeispiels
einer erfindungsgemäßen optischen Positionsmesseinrichtung;

Figur 11    unterschiedliche, stark-schematisierte Ansichten mit wichtigen Komponenten eines fünften Ausführungsbeispiels der erfindungsgemäßen optischen Positionsmesseinrichtung.

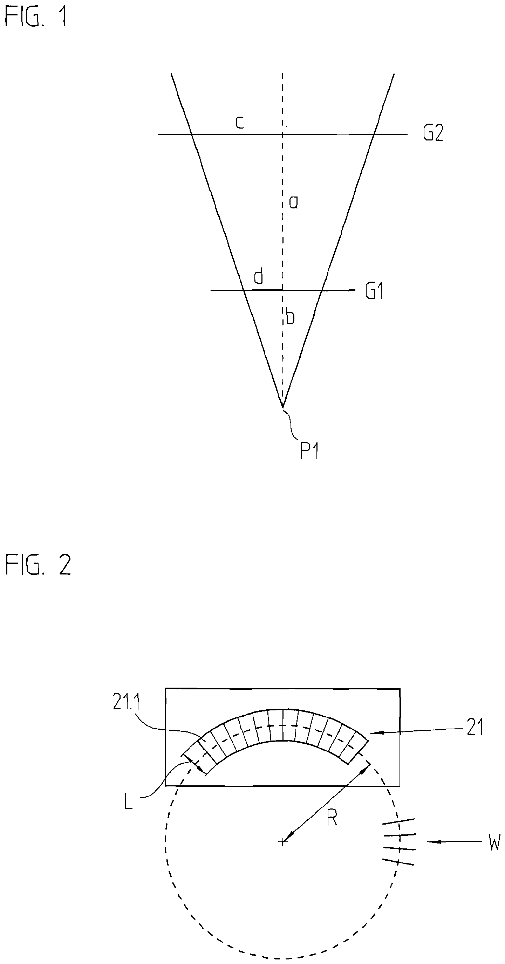

Anhand von Figur 1 seien zunächst einige Grundzusammenhänge des zur Abtastung in der erfindungsgemäßen Positionsmesseinrichtung genutzten Zentralprojektionsprinzips erläutert.

Dargestellt sind in Figur 1 zwei Gitter G1, G2 mit periodischen Gitterstrukturen, die parallel zueinander angeordnet sind. Das Gitter G1 besitzt eine Teilungsperiode d. Im Punkt P1 sei eine idealerweise punktförmige Lichtquelle angeordnet. Der Abstand zwischen dem Punkt P1 und dem Gitter G1 wird mit b bezeichnet, der Abstand zwischen dem Gitter G1 und dem Gitter G2 wird mit a bezeichnet.

Um in der Realität eine möglichst punktförmige Lichtquelle auszubilden, sollte der Durchmesser des lichtemittierenden Lichtquellen-Bereichs im übrigen möglichst kleiner oder gleich der Teilungsperiode d des Gitters G1 sein. Beim Gitter G1 handelt es sich in den erfindungsgemäßen Positionsmesseinrichtungen um die abgetastete Maßverkörperung, die in bekannter Art und Weise entweder als Linear-Maßverkörperung oder als Winkel-Maßverkörperung ausgebildet ist. Beim Gitter G2 handelt es sich in den erfindungsgemäßen Positionsmesseinrichtungen entweder um ein periodisches Detektions- oder Abtastgitter mit nachgeordneten Detektoren oder aber um eine Detektoranordnung, die als sog. strukturierter Photodetektor ausgebildet ist. Ein derartiger strukturierter Photodetektor besteht aus einer Mehrzahl einzelner, identisch ausgebildeter Detektorelemente, die periodisch angeordnet sind. Das detektionsseitige periodische Gitter G2 kann demzufolge in den erfindungsgemäßen optischen Positionsmesseinrichtungen in zwei unterschiedlichen Varianten ausgebildet sein.

Gemäß den bekannten geometrischen Strahlensatz-Beziehungen gilt für die verschiedenen Größen a - d in Figur 1 die nachfolgende Gleichung 1.1:

$$\frac{c}{a+b} = \frac{d}{b} \qquad \text{(Gl. 1.1)}$$

Für den Vergrößerungsmaßstab β der dabei resultierenden Abbildung gilt damit:

$$\beta = \frac{c}{d} = \frac{a+b}{b} \qquad \text{(Gl. 1.2)}$$

Einer Struktur mit der Teilungsperiode d auf dem Gitter G1 wird demzufolge vergrößert auf eine Struktur mit der Teilungsperiode c auf dem Gitter G2 gemäß der Gleichung 1.3 abgebildet:

$$c = \beta \cdot d = \frac{a+b}{b} \cdot d \qquad \text{(Gl. 1.3)}$$

Auf diese grundsätzlichen Beziehungen wird im Verlauf der Beschreibung von Ausführungsbeispielen erfindungsgemäßer Positionsmesseinrichtungen nachfolgend noch mehrmals zurückgegriffen werden.

Im Gefolge wird nunmehr eine erste Ausführungsform der erfindungsgemäßen Positionsmesseinrichtung anhand der Figuren 2 - 6 erläutert.

Das erste Ausführungsbeispiel einer erfindungsgemäßen Positionsmesseinrichtung umfasst eine in einer Maßverkörperungsebene angeordnete Linear-Maßverkörperung, die sich entlang einer ersten Geraden erstreckt, sowie eine in mindestens einer Messrichtung bewegliche Abtasteinheit. Auf Seiten der Abtasteinheit sind eine Lichtquelle sowie eine in einer Detektionsebene angeordnete und sich entlang einer gekrümmten Anordnungsrichtung bzw. entlang einer zweiten Linie erstreckende Detektoranordnung vorgesehen, beispielsweise ausgebildet als strukturierter Photodetektor. Das aus der optischen Abtastung der Linear-Maßverkörperung resultierende Streifenmuster mit parallel zueinander orientierten Streifen soll in dieser Variante in ein sich entlang der gekrümmten Anordnungsrichtung erstreckendes, d.h. in ein winklig orientiertes Streifenmuster transformiert werden. Wie bereits eingangs erläutert kann im Fall einer derartigen Transformation dann in der entsprechenden optischen Positionsmesseinrichtung detektionsseitig ein Opto-ASIC in der Abtasteinheit eingesetzt werden, der auch zur Abtastung von Winkel-Maßverkörperungen genutzt werden kann.

Figur 2 zeigt eine schematische Darstellung zur Erläuterung verschiedener geometrischer Größen des ersten Ausführungsbeispiels einer erfindungsgemäßen optischen Positionsmesseinrichtung. So ist in Figur 2 die als strukturierter Photodetektor ausgebildete Detektoranordnung 21 der Positionsmesseinrichtung in der Abtasteinheit dargestellt. Hierbei besteht die Detektoranordnung 21 aus einer Mehrzahl von identisch ausgebildeten, rechteckförmigen Detektorelementen 21.1, respektive Photodioden. Die Detektorelemente 21.1 sind entlang einer gekrümmten Anordnungsrichtung bzw. entlang einer zweiten Linie auf einer Kreissegmentlinie periodisch in der Detektionsebene angeordnet und besitzen in radialer Richtung jeweils die Länge L. Dabei sind die Detektorelemente 21.1 dergestalt periodisch angeordnet, dass darüber eine Abtastung einer fiktiven - schematisiert und nur teilweise angedeuteten - ebenfalls periodischen, kreisringförmig angeordneten Winkel-Maßverkörperung W möglich wäre. Die Winkel-Maßverkörperung W besitzt einen mittleren Radius R. Aufgrund der vorgesehenen Periodizität der Detektoranordnung 21 soll eine Anzahl N Teilungsperioden der Winkelmaßverkörperung W aus der Maßverkörperungsebene pro Umfang abtastbar sein.

Die entlang einer gekrümmten Linie ausgebildete bzw. angeordnete Detektoranordnung 21 besitzt in radialer Richtung unterschiedliche Teilungsperioden TP. Betrachtet werden nachfolgend lediglich eine radial innerste Teilungsperiode $TP_{Innen}$, eine mittlere Teilungsperiode $TP_{Mitte}$ sowie eine radial äußerste Teilungsperiode $TP_{Aussen}$ der Detektoranordnung 21. Die verschiedenen Teilungsperioden $TP_{Innen}$, $TP_{Mitte}$, $TP_{Aussen}$ ergeben sich wie folgt:

$$TP_{Aussen} = 2\pi \cdot \left( R + \frac{L}{2} \right) / N \qquad \text{(Gl. 2.1)},$$

$$TP_{Mitte} = 2\pi R / N \qquad \text{(Gl. 2.2)},$$

$$TP_{Innen} = 2\pi \cdot \left( R - \frac{L}{2} \right) / N \qquad \text{(Gl. 2.3)},$$

mit:

$TP_{Aussen}$ := radial äußerste Teilungsperiode der Detektoranordnung
$TP_{Mitte}$ := mittlere Teilungsperiode der Detektoranordnung
$TP_{Innen}$ := radial innerste Teilungsperiode der Detektoranordnung
R := mittlerer Radius der abgetasteten Winkel-Maßverkörperung
L := Länge der Detektorelemente in radialer Richtung
N := Anzahl der Teilungsperioden der Winkelmaßverkörperung pro Umfang

Auf die Gleichungen 2.1, 2.2 und 2.3 wird ebenfalls nachfolgend noch mehrmals zurückgegriffen werden.
Als entscheidende Maßnahme ist gemäß der vorliegenden Erfindung nunmehr vorgesehen, dass in der entsprechenden optischen Positionsmesseinrichtung die Maßverkörperungsebene und die Detektionsebene in definierter Art und Weise nicht-parallel zueinander, d.h. verkippt zueinander angeordnet werden. Als Maßverkörperungsebene sei in diesem Zusammenhang diejenige Ebene verstanden, in der die abgetastete Maßverkörperung angeordnet ist; als Detektionsebene wird diejenige Ebene definiert, in der die Detektoranordnung platziert ist und in der das erzeugte Streifenmuster abgetastet und in verschiebungsabhängige Signale umgesetzt wird.
Aufgrund der erfindungsgemäß vorgesehenen Verkippung von Maßverkörperungs- und Detektionsebene ist es z.B. möglich, ein aus der Abtastung einer Linear-Maßverkörperung resultierendes Streifenmuster mit parallel zueinander orientierten hellen und dunklen Streifen in ein winklig orientiertes Streifenmuster zu überführen bzw. zu transformieren. Die Linear-Maßverkörperung erstreckt sich hierbei wie das resultierende Streifenmuster entlang einer ersten Geraden. Beim erfindungsgemäß transformierten Streifenmuster sind die alternierenden hellen und dunklen Streifen in winkliger Form zueinander orientiert und können mittels einer Detektoranordnung abgetastet werden, die sich entlang einer gekrümmten Anordnungsrichtung bzw. entlang einer zweiten Linie erstreckt. Ein Opto-ASIC, der ursprünglich für radiale Abtastungen ausgelegt wurde, kann dann in vorteilhafter Weise ebenfalls für die Abtastung von Linear-Maßverkörperungen eingesetzt werden.

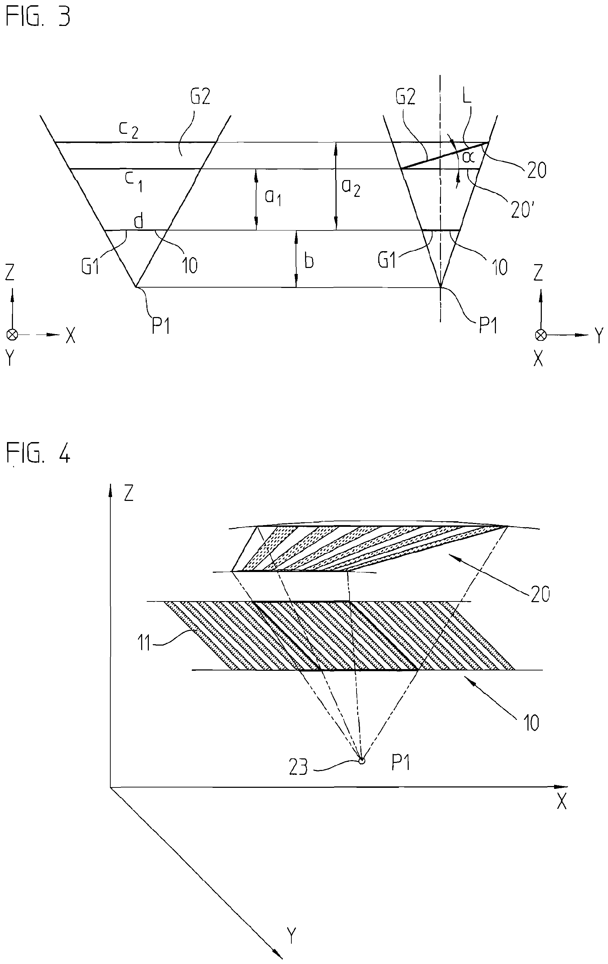

In der Figuren 3 sind in wiederum stark schematisierter Form bestimmte Komponenten einer derartigen ersten Ausführungsform der erfindungsgemäßen optischen Positionsmesseinrichtung in verschiedenen zweidimensionalen Ansichten dargestellt; Figur 4 zeigt eine ebenfalls schematisierte räumliche Teil-Ansicht einer derartigen Positionsmesseinrichtung. Anhand dieser Figuren werden nachfolgend weitere geometrische Zusammenhänge sowie vorteilhafte Dimensionierungsregeln der vorliegenden Erfindung erläutert.

In den Figuren wird nachfolgend mit dem Bezugszeichen 10 die Maßverkörperungsebene und mit dem Bezugszeichen 20 die Detektionsebene bezeichnet. In der rechten Ansicht der Figur 3 ist erkennbar, dass die Detektionsebene 20 gegenüber der Maßverkörperungsebene 10 um den Verkippwinkel $\alpha$ verkippt angeordnet ist. Hierbei ist der Verkippwinkel $\alpha$ als Winkel in der yz-Ebene zwischen der tatsächlichen (verkippten) Detektionsebene 20 gegenüber einer (fiktiven) Ebene 20' definiert, in der die Detektionsebene 20 parallel zur Maßverkörperungsebene 10 angeordnet wäre.

Mit der Raumrichtung x wird in den Figuren jeweils die sog. Messrichtung bezeichnet, entlang der die Maßverkörperung 11 gegenüber einer - in den Figuren 3 und 4 nicht dargestellten - Abtasteinheit 22 mindestens relativ beweglich angeordnet ist. Die Maßverkörperung 11 besteht im dargestellten Beispiel gemäß Figur 4 aus einer in Messrichtung x periodischen Durchlichtteilung mit alternierend angeordneten durchlässigen und undurchlässigen Teilbereichen, die sich jeweils in der sog. Strichrichtung y in der Maßverkörperungsebene 10 erstrecken; die Strichrichtung y ist in der Maßverkörperungsebene 10 senkrecht zur Messrichtung x orientiert. Mit z wird in den Figuren die auf die Maßverkörperungsebene 10 senkrechte Raumrichtung bezeichnet.

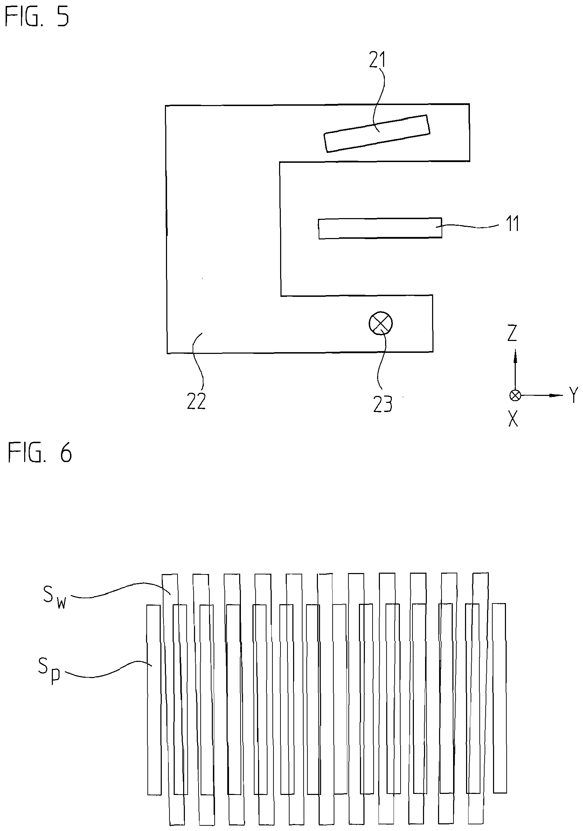

In Figur 5 ist in ebenfalls stark schematisierter Form eine Querschnittsansicht dieser Variante einer erfindungsgemäßen Positionsmesseinrichtung dargestellt, wobei in dieser Darstellung die verschiedenen geometrischen Größen aus den vorhergehenden Figuren nicht eingezeichnet sind. Die optische Positionsmesseinrichtung umfasst in dieser Ausführungsform eine sich in Messrichtung x erstreckende Linear-Maßverkörperung 11, ausgebildet als Durchlicht-Teilung sowie eine hierzu in Messrichtung x relativ bewegliche Abtasteinheit 22. Auf Seiten der Abtasteinheit 22 ist in diesem Beispiel die im Punkt P1 angeordnete Lichtquelle 23 sowie die in der Detektionsebene platzierte Detektoranordnung 21 angeordnet. Ggf. können noch zusätzliche - nicht dargestellte - optische Elemente im Abtaststrahlengang angeordnet sein. Ferner ist es möglich, noch weitere Signalverarbeitungselemente in der Abtasteinheit 22 vorzusehen, um die erzeugten Positionssignale weiterzuverarbeiten. Die gelieferten Positionssignale werden in einer - ebenfalls nicht dargestellten - nachgeordneten Folgeelektronik weiterverarbeitet.

Die Ausdehnung bzw. Länge der Detektoranordnung in der Detektionsebene 20 senkrecht zur Anordnungsrichtung der Detektoranordnung sei wie in der rechten Ansicht von Figur 3 angedeutet mit L bezeichnet. Mit wird der lotrechte Abstand der der Linear-Maßverkörperung nächstgelegenen Kante der Detektoranordnung 21 auf die Maßverkörperungsebene 10 bezeichnet; mit $a_2$ hingegen der lotrechte Abstand von der der Linear-Maßverkörperung am weitesten entfernten Kante der Detektoranordnung 21 auf die Maßverkörperungsebene 10.

Die anhand von Figur 2 bereits definierte radial innerste Teilungsperiode $TP_{Innen}$ der radialen Detektoranordnung 21 ist in den Figuren 3 und 4 mit dem Bezugszeichen $c_1$ versehen, die radial äußerste Teilungsperiode $TP_{Au-ßein}$ der Detektoranordnung 21 mit dem Bezugszeichen $c_2$.

Unter Nutzung der im Zusammenhang mit dem Projektionsverfahren in Figur 1 vorgestellten Beziehung 1.1, lassen sich für den vorliegenden Fall der Figuren 3 und 4 die nachfolgenden Gleichungen 3.1, 3.2 formulieren:

$$\frac{c_2}{b+a_2} = \frac{d}{b} \qquad \text{(Gl. 3.1)},$$

$$\frac{c_1}{b+a_1} = \frac{d}{b} \qquad \text{(Gl. 3.2)},$$

mit:

$a_1$ := lotrechter Abstand von der der Linear-Maßverkörperung oder Winkelmaßverkörperung nächstgelegenen Kante der Detektoranordnung auf die Maßverkörperungsebene

$a_2$ := lotrechter Abstand von der der Linear-Maßverkörperung oder Winkel-Maßverkörperung am weitesten entfernten Kante der Detektoranordnung auf die Maßverkörperungsebene

b := Abstand der Lichtquelle lotrecht auf die Linear-Maßverkörperung

$c_1$:= Ausdehnung in Messrichtung der der Lichtquelle am nächsten benachbarten Kante eines zu einem Teilungsbereich zugehörigen Bereichs der Detektoranordnung

$c_2$ := Ausdehnung in Messrichtung der von der Lichtquelle am weitesten entfernt liegenden Kante eines zu einem Teilungsbereich zugehörigen Bereichs auf der Detektoranordnung

d := Teilungsperiode der Linear-Maßverkörperung

Für den Verkippwinkel $\alpha$ der Detektionsebene 20 gegenüber einer parallel angeordneten Detektionsebene 20' gilt dann:

$$\sin\alpha = \frac{a_2 - a_1}{L}, \; L \neq 0 \; (\text{Gl. 3.3}),$$

mit:

$\alpha$ := Verkippwinkel

$a_1$ := lotrechter Abstand von der der Linear-Maßverkörperung oder Winkelmaßverkörperung nächstgelegenen Kante der Detektoranordnung auf die Maßverkörperungsebene

$a_2$ := lotrechter Abstand von der der Linear-Maßverkörperung oder Winkel-Maßverkörperung am weitesten entfernten Kante der Detektoranordnung auf die Maßverkörperungsebene

L := Ausdehnung der Detektoranordnung senkrecht zur Anordnungsrichtung Außerdem muss für Gleichung 3.3 gelten: $a_2 - a_1 < L$.

Ferner lassen sich aus den Gleichungen 3.1, 3.2 die nachfolgenden Beziehungen 3.4, 3.5 für die Größen b und d herleiten:

$$b = \frac{c_1 a_2 - c_2 a_1}{c_2 - c_1}; \; c_2 \neq c_1 \qquad (\text{Gl. 3.4}),$$

$$d = \frac{c_1 a_2 - c_2 a_1}{a_2 - a_1}; \; a_2 \neq a_1 \qquad (\text{Gl. 3.5}),$$

mit:

$a_1$ := lotrechter Abstand von der der Linear-Maßverkörperung oder Winkelmaßverkörperung nächstgelegenen Kante der Detektoranordnung auf die Maßverkörperungsebene

$a_2$ := lotrechter Abstand von der der Linear-Maßverkörperung oder Winkel-Maßverkörperung am weitesten entfernten Kante der Detektoranordnung auf die Maßverkörperungsebene

b := Abstand der Lichtquelle lotrecht auf die Linear-Maßverkörperung

$c_1$ := Ausdehnung in Messrichtung der der Lichtquelle am nächsten benachbarten Kante eines zu einem Teilungsbereich zugehörigen Bereichs der Detektoranordnung

$c_2$ := Ausdehnung in Messrichtung der von der Lichtquelle am weitesten entfernt liegenden Kante eines zu einem Teilungsbereich zugehörigen Bereichs auf der Detektoranordnung

d := Teilungsperiode der Linear-Maßverkörperung

Über die Gleichungen 3.4 und 3.5 lassen sich bei einer vorgegebenen Abtastgeometrie demzufolge wichtige geometrische Größen einer erfindungsgemäßen optischen Positionsmesseinrichtung bestimmen.

Nachfolgend sei anhand eines zahlenmäßigen Ausführungsbeispiels erläutert, wie mittels der obigen Beziehungen eine erste Ausführungsform einer erfindungsgemäßen optischen Positionsmesseinrichtung ausgelegt werden kann.

Hierbei sei eine bestimmte Detektoranordnung vorgegeben, die sich entlang einer gekrümmten Linie bzw. Anordnungsrichtung erstreckt. Die Detektoranordnung ist durch die geometrischen Größen $c_1$, $c_2$ und L bzw. L, R und N gemäß den obigen Definitionen charakterisiert. Ferner seien in Bezug auf die Positionsmesseinrichtung die Größen b und $a_2$ vorgegeben, da das Gesamtsystem etwa in einen bestimmten Bauraum der konkreten Anwendung passen muss.

Über eine derartige Detektoranordnung, beispielsweise ausgebildet als Opto-ASIC, die für die Abtastung einer Winkel-Maßverkörperung ausgelegt wurde, soll auch die Abtastung einer Linear-Maßverkörperung erfolgen, die sich entlang einer ersten Geraden erstreckt.

Zu ermitteln sind im Rahmen der Auslegung der erfindungsgemäßen Positionsmesseinrichtung nunmehr die Parameter d (Teilungsperiode der Linear-Maßverkörperung), $a_2$ und insbesondere der einzustellende Verkippwinkel $\alpha$ der Detektionsebene, über den die erfindungsgemäße Transformation bzw. Überführung des linearen Streifenmusters in ein winkliges Streifenmuster sichergestellt wird.

Wenn die Parameter $a_2$, b, $c_1$ und $c_2$ konkret vorgegeben sind, so ergibt sich die Größe d, d.h. die Teilungsperiode der Linear-Maßverkörperung, aus der Gleichung 3.1 gemäß:

$$d = b \cdot \frac{c_2}{b + a_2}$$

Anschließend lässt sich unter Kenntnis von d dann die Größe $a_1$ aus der Gleichung 3.2 ermitteln:

$$a_1 = b \cdot \frac{c_1}{d} - b$$

Mit Hilfe von Gleichung 3.3 lässt sich dann schließlich der noch benötigte Kippwinkel $\alpha$ bestimmen.

In einer konkreten Ausführungsform seien die Parameter R, L, $a_2$, b, $c_1$ und $c_2$ einer optischen Positionsmesseinrichtung folgendermaßen vorgegeben:

R = 19mm
L = 2mm
$a_2$ = 1000$\mu$m
b = 4mm
$c_1$ = 220.893$\mu$m
$c_2$= 245.437$\mu$m

Gemäß dem soeben erläuterten Herleitungsprocedere ergeben sich die fehlenden Geometrie-Parameter d, $a_1$ und $\alpha$ der optischen Positionsmesseinrichtung zu

d = 196.34$\mu$m,
$a_1$ = 500$\mu$m,
$\alpha$ = 14.47°.

Auf diese Art und Weise kann demzufolge eine vorhandene, winklig orientierte Detektoranordnung eines Opto-ASICs auch zur Abtastung einer Linear-Maßverkörperung eingesetzt werden. Es ist zur Abtastung der Linear-Maßverkörperung nicht nötig, eine neue Detektoranordnung zu entwickeln.

In Figur 6 ist eine Ansicht der Detektionsebene einer derartigen Positionsmesseinrichtung mit dem dort aufgrund des Verkippens der Detektionsebene resultierenden winkligen Streifenmuster $S_W$ gezeigt. Ferner ist in Figur 6 das Maßverkörperungsmuster $S_P$ mit parallel zueinander angeordneten Streifen dargestellt. Die in Figur 6 nicht eingezeichnete Detektoranordnung besitzt eine winklige Anordnung von einzelnen Detektorelementen bzw. Photodioden gemäß dem transformierten winkligen Streifenmuster $S_W$.

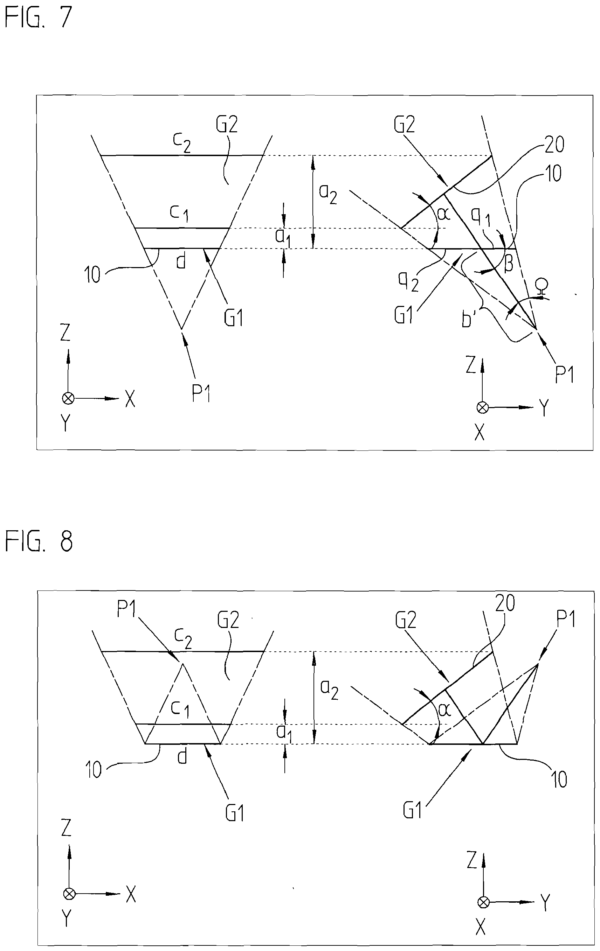

Eine zweite Ausführungsform der erfindungsgemäßen optischen Positionsmesseinrichtung wird nachfolgend anhand der Figur 7 erläutert.

In der vorab beschriebenen ersten Ausführungsform einer erfindungsgemäßen optischen Positionsmesseinrichtung war gemäß Figur 3 vorgesehen, dass die Beleuchtungsrichtung parallel zur Symmetrieachse der Maßverkörperung, orientiert ist. Wie insbesondere aus Figur 3 hervorgeht bedeutet dies, dass die Lichtquelle bzw. der Punkt P1 derart angeordnet wird, dass ein von der Lichtquelle bzw. P1 emittierter Zentralstrahl lotrecht und insbesondere mittig in x-Richtung auf die Maßverkörperung auftrifft.

Es können nun jedoch in realen Systemen Abtastbedingungen vorliegen, die eine andere Anordnung der Lichtquelle bzw. von P1 in Bezug auf die Symmetrieachse der Maßverkörperung erfordern. Dies bedeutet, dass dann die Beleuchtungsrichtung nicht-parallel zur Symmetrieachse der Maßverkörperung gewählt wird bzw. dass der von der Lichtquelle emittierte Zentralstrahl nicht-lotrecht auf die Maßverkörperung auftrifft. Konkret hat dies etwa zur Folge, dass die Position P1 der Lichtquelle in Strichrichtung y geeignet verschoben wird. Im Regelfall wird man aber die Geometrie so wählen, dass auch bei nicht-lotrechter Beleuchtung der Zentralstrahl in der xz-Ebene einen rechten Winkel mit der Maßverkörperung bildet und die Punktlichtquelle entlang der x-Achse in der Symmetrieachse liegt.

Auf diese Art und Weise lässt sich ferner eine gewünschte Ausleuchtung der Teilungs-Strukturen auf der Linear-Maßverkörperung in der Strichrichtung y einstellen, die sich von der gleichmäßigen Ausleuchtung der Teilungsstrukturen gemäß dem oben erläuterten Beispiel unterscheidet. So kann auf diese Art und Weise etwa definiert eingestellt werden, dass benachbart angeordnete Inkremental- und Codespuren auf der Linear-Maßverkörperung unterschiedlich ausgeleuchtet werden bzw. unterschiedliche Flächenverhältnisse auf der Maßverkörperung bzw. auf der Detektoranordnung aufweisen.

Ein derartiger Fall ist in der Figur 7 als zweite Ausführungsform der erfindungsgemäßen optischen Positionsmesseinrichtung dargestellt. In der Figur 7 werden die gleichen Bezugszeichen für die identischen Komponenten verwendet wie in der oben erläuterten Figur 3.

Wie bereits im vorher beschriebenen Ausführungsbeispiel ist zur Transformation des linearen Streifenmusters in ein winklig orientiertes Streifenmuster die Detektionsebene 20 nicht-parallel bzw. um den Verkippwinkel $\alpha$ verkippt gegenüber der Maßverkörperungsebene 10 angeordnet. Im Unterschied zum vorherigen Beispiel ist jedoch - wie aus der rechten Ansicht in Figur 7 ersichtlich - die Position P1 der Lichtquelle gegenüber dem Gitter G1 bzw. der Linear-Maßverkörperung nach rechts in Strichrichtung y verschoben. Der von der Lichtquelle emittierte Zentralstrahl fällt demzufolge nicht lotrecht auf die Maßverkörperungsebene 10 sondern unter einem Winkel $\beta$, wie dies ebenfalls aus der rechten Ansicht in Figur 7 ersichtlich ist. Auf diese Art und Weise resultieren in der Maßverkörperungsebene 10 zwei unterschiedlich große, von der Lichtquelle ausgeleuchtete Bereiche mit Ausdehnungen $q_1$, $q_2$ in Strichrichtung y. Im dargestellten Beispiel ist $q_2 > q_1$ gewählt. Die Ausdehnung $q_1$, $q_2$ der beiden Bereiche lässt sich gemäß den beiden nachfolgenden Beziehungen 4.1, 4.2 ermitteln bzw. einstellen:

$$q_1 = b' \cdot \frac{\sin\Omega}{\sin(180° - \beta - \Omega)} \qquad \text{(Gl. 4.1)},$$

$$q_2 = b' \cdot \frac{\sin\Omega}{\sin(\beta - \Omega)} \qquad \text{(Gl. 4.2)},$$

für $\beta \leq 90°$ und $\Omega < \beta$,
mit:

$q_1$:= Ausdehnung eines ersten beleuchteten Bereichs auf der Maßverkörperung in Strichrichtung y

$q_2$:= Ausdehnung eines zweiten beleuchteten Bereichs auf der Maßverkörperung in Strichrichtung y, der an den ersten Bereich angrenzt

$b'$:= nicht-lotrechter Abstand der Lichtquelle zu demjenigen Punkt auf der Linear-Maßverkörperung, an dem diese in zwei Teile mit den Längen $q_1$ und $q_2$ geteilt wird

$\beta$:= Beleuchtungswinkel der Maßverkörperungsebene

$\Omega$:= halber Abstrahlwinkel der Lichtquelle

Das oben erläuterte Beispiel aus der Figur 3 stellt demzufolge eigentlich den Spezialfall mit lotrechtem Einfall der Beleuchtung auf die Maßverkörperungsebene und $\beta$ = 90° dar, woraus sich dann mit den Gleichungen 4.1, 4.2 $q_1$ = $q_2$ ergeben würde.

Ist wie im Beispiel der Figur 7 kein lotrechter Einfall der Beleuchtung vorgesehen, könnten die Parameter b', $\Omega$ und $\beta$ wie folgt gegeben sein:

b'= 4mm
$\Omega$ = 30°
$\beta$ = 60°

Die Breiten $q_1$, $q_2$ der beiden ausgeleuchteten Bereiche auf der Linear-Maßverkörperung ergeben sich dann mit den Gleichungen 4.1 und 4.2 zu:

$$q_1 = 2mm$$
$$q_2 = 4mm$$

Auf diese Art und Weise können demzufolge durch geeignete Variation der Lichtquellenposition P1 gewünschte unterschiedliche Flächenverhältnisse von Bereichen auf der Linear-Maßverkörperung gegenüber der Detektoranordnung definiert eingestellt werden. Dies kann etwa dann vorteilhaft sein, wenn z.B. besonders verschmutzungsanfällige Bereiche auf der Linear-Maßverkörperung möglichst groß gestaltet werden sollen. Derartige Bereiche würden dann gemäß dem obigen Zahlenbeispiel die Ausdehnung $q_2 = 4mm$ besitzen. Gleichzeitig ist sichergestellt, dass auf Seiten der Detektoranordnung die zur Detektion von Licht aus den anderen Bereichen $q_1$ genutzten Detektoranordnungsbereiche mit einer hinreichend hohen Lichtleistung pro Raumfläche bestrahlt werden. Wird der Winkel $\Omega$ vom Zentralstrahl aus bestimmt, so gewährleistet die hier beispielhaft beschriebene Situation eine möglichst hohe Gesamtintensität auf der Detektoranordnung. Natürlich müssen die Winkel von den Randstrahlen zur mit b' bezeichneten Geraden nicht gleich sein; ferner muss auch der Zentralstrahl nicht der Geraden b' folgen. Dies könnte beispielsweise dann wichtig sein, wenn ein bestimmter Bereich besonders viel Lichtintensität erhalten soll. Die oben diskutierten Gleichungen sind dann für den skizzierten Fall neu anzusetzen.

Eine dritte Ausführungsform der erfindungsgemäßen optischen Positionsmesseinrichtung sei nachfolgend anhand der Figur 8 erläutert. Wie bereits im vorhergehenden Beispiel werden auch hier für funktional gleichwertige Elemente die gleichen Bezugszeichen verwendet wie im ersten Ausführungsbeispiel.

Während die bislang erläuterten Beispiele jeweils Linear-Maßverkörperungen umfassten, die im Durchlicht abgetastet wurden, ist in der Variante gemäß der Figur 8 vorgesehen, ein Auflicht-System mit einer abgetasteten Linear-Maßverkörperung auszubilden. Die in der Maßverkörperungsebene 10 angeordnete Linear-Maßverkörperung ist demzufolge als Auflicht-Maßverkörperung ausgebildet, die ein Gitter umfasst, das aus Teilungsbereichen mit unterschiedlichen Reflexionseigenschaften besteht.

Wie aus der Figur 8 hervorgeht ist hierzu eine entsprechende Faltung des Abtaststrahlengangs erforderlich, um letztlich die Lichtquelle an der Position P1 auf der gleichen Seite anzuordnen wie die Detektoranordnung.

Im dargestellten Beispiel der Figur 8 ist wie in der vorhergehend erläuterten zweiten Ausführungsform vorgesehen, die Lichtquellenposition in Strichrichtung y gegenüber einer lotrechten Beleuchtung der Linear-Maßverkörperung zu versetzen. Auf diese Art und Weise lassen sich wiederum unterschiedlich ausgeleuchtete Bereiche auf der Linear-Maßverkörperung definiert einstellen.

Die Auflicht-Variante der erfindungsgemäßen optischen Positionsmesseinrichtung zeichnet sich insbesondere durch ein hohes Maß an Positionierfreiheit bzgl. der Lichtquelle im Abtaststrahlengang aus und kann daher besonders vorteilhaft an verschiedenste Abtastkonfigurationen angepasst werden.

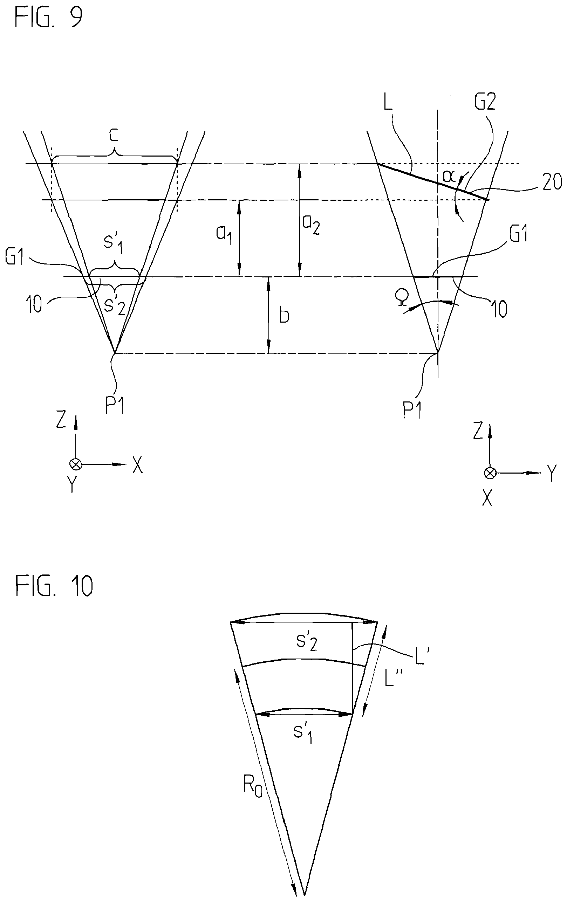

Nachfolgend soll anhand der Figuren 9 und 10 eine vierte Ausführungsform der erfindungsgemäßen optischen Positionsmesseinrichtung erläutert werden.

Gemäß den bislang beschriebenen Beispielen war jeweils vorgesehen, eine Linear-Maßverkörperung, die sich entlang einer ersten Geraden erstreckt, mittels einer Detektoranordnung abzutasten, die sich entlang einer gekrümmten Anordnungsrichtung bzw. entlang einer zweiten Linie erstreckt, deren Krümmung sich von der ersten Geraden unterscheidet. Das aus der Abtastung der Linear-Maßverkörperung resultierende Streifenmuster mit parallel zueinander orientierten Streifen musste hierzu durch geeignetes Verkippen von Maßverkörperungs- und Detektionsebene in ein winkliges Streifenmuster transformiert werden.

Gemäß der vierten Ausführungsform der erfindungsgemäßen optischen Positionsmesseinrichtung ist auch der hierzu umgekehrte Fall durch eine geeignete nicht-parallele Anordnung von Maßverkörperungsebene und Detektionsebene realisierbar. Dies bedeutet, dass durch geeignetes Verkippen derselben auch eine Winkel-Maßverkörperung, die sich entlang einer ersten gekrümmten Linie erstreckt, mittels einer Detektoranordnung abtastbar ist, die sich entlang einer geradlinigen Anordnungsrichtung bzw. entlang einer zweiten Linie erstreckt, deren Krümmung sich von der ersten Linie unterscheidet. Über das Verkippen der Detektionsebene resultiert in diesem Fall demzufolge die Transformation eines winkligen Streifenmusters in ein paralleles Streifenmuster. Die zweite Linie erstreckt sich demzufolge geradlinig, deren Krümmungsradius ist Unendlich.

Die für diesen Fall maßgeblichen geometrischen Verhältnisse sind analog zu den vorhergehenden Beispielen in der Figur 9 dargestellt. In der Maßverkörperungsebene 10 ist die abzutastende Winkel-Maßverkörperung bzw. das Gitter G1 angeordnet. Mit dem Bezugszeichen $s_1$, wird in den Figuren die Länge der Sehne des Bogensegments auf der innenliegenden Seite der Winkel-Maßverkörperung bezeichnet, mit $s_2$, die Länge der Sehne des Bogensegments auf der außenliegenden Seite der Winkel-Maßverkörperung.

In der Detektionsebene 20 ist die (periodische) Detektoranordnung bzw. das Gitter G2 platziert. Die Detektoranordnung besitzt die Periodizität c, mit dem Bezugszeichen L wird analog zu den vorherigen Beispielen die Ausdehnung der Detektoranordnung in Strichrichtung y angegeben. In der Maßverkörperungsebene 10 bezeichnet L' die abbildungsmäßig zugehörige Ausdehnung.

Der Verkippwinkel $\alpha$ der Detektionsebene 20 sei wiederum definiert wie in den oben diskutierten Fällen.

Ausgehend von einer konkret vorgegebenen Geometrie der Detektoranordnung soll nachfolgend veranschaulicht werden, wie aufgrund der erfindungsgemäßen Überlegungen die maßgeblichen Parameter $s_1'$, $s_2'$, L' für eine abzutastende Winkel-Maßverkörperung sowie der Verkippwinkel $\alpha$ abgeleitet werden können.

So gelten aufgrund der anhand von Figur 1 erläuterten Strahlensatzbedingungen die folgenden Gleichungen 5.1, 5.2 für die in den Figuren 9a, 9b dargestellten Verhältnisse:

$$\frac{s_1'/2}{c/2} = \frac{b}{b + a_2} \qquad \text{(Gl. 5.1)}$$

$$\frac{s_2'/2}{c/2} = \frac{b}{b + a_1} \qquad \text{(Gl. 5.2)}$$

Aus Gleichung 5.1 lässt sich demzufolge die Größe $s_1'$ und aus Gleichung 5.2 die Größe $s_2'$ wie folgt bestimmen:

$$s_1' = b \cdot \frac{c}{b + a_2} \qquad \text{(Gl. 5.1´)}$$

$$s_2' = b \cdot \frac{c}{b + a_1} \qquad \text{(Gl. 5.2´)}$$

Der Parameter L' der Winkel-Maßverkörperung ergibt sich gemäß Gleichung 5.3 zu:

$$L' = 2 \cdot b \cdot \tan \Omega \qquad \text{(Gl. 5.3)}$$

Desweiteren ist bei einer derartigen Ausgestaltung der Positionsmesseinrichtung der halbe Ausleuchtungswinkel $\Omega$ gemäß der nachfolgenden Gleichung 5.4 einzustellen:

$$\tan \Omega = \frac{\sqrt{L^2 - (a_2 - a_1)^2}}{a_2 + 2 \cdot b + a_1} \qquad \text{(Gl. 5.4)}$$

Die Beziehungen 5.3 und 5.4 sind im übrigen auch für das erste beschriebene Ausführungsbeispiel gültig.

Neben den bislang erläuterten Parametern wäre im vierten Ausführungsbeispiel der erfindungsgemäßen optischen Positionsmesseinrichtung bei einer vorgegebenen Geometrie der Detektoranordnung schließlich noch der mittlere Radius $R_0$ der abgetasteten Winkel-Maßverkörperung zu bestimmen. Hierzu sei auf die Figur 10 verwiesen, die bestimmte Geometrieparameter der Winkel-Maßverkörperung in der Maßverkörperungsebene veranschaulicht.

Unter Anwendung des Strahlensatzes gilt für die Verhältnisse in Figur 10 die nachfolgende Gleichung 5.5:

$$\frac{s_1'}{R_0 - \frac{L'}{2}} = \frac{s_2'}{R_0 + \frac{L'}{2}} \qquad \text{(Gl. 5.5)}$$

mit:

$$L'' = \frac{L'}{\cos(\arcsin(\frac{s'_2 + s'_1}{4 \cdot R_0}))} \approx L' \qquad \text{da } s'_2 + s'_1 << 4R_0$$

Hieraus lässt sich die gesuchte Größe $R_0$ für den mittleren Radius der Winkel-Maßverkörperung folgendermaßen ermitteln:

$$R_0 = \frac{L''}{2} \cdot \frac{s'_2 + s'_1}{s'_2 - s'_1} \ ; \ s'_2 \neq s'_1 \qquad \text{(Gl. 5.5')}$$

Für den Verkippwinkel $\alpha$ gilt im vierten Ausführungsbeispiel der erfindungsgemäßen optischen Positionsmesseinrichtung ebenfalls die bereits oben erläuterte Gleichung 3.3.

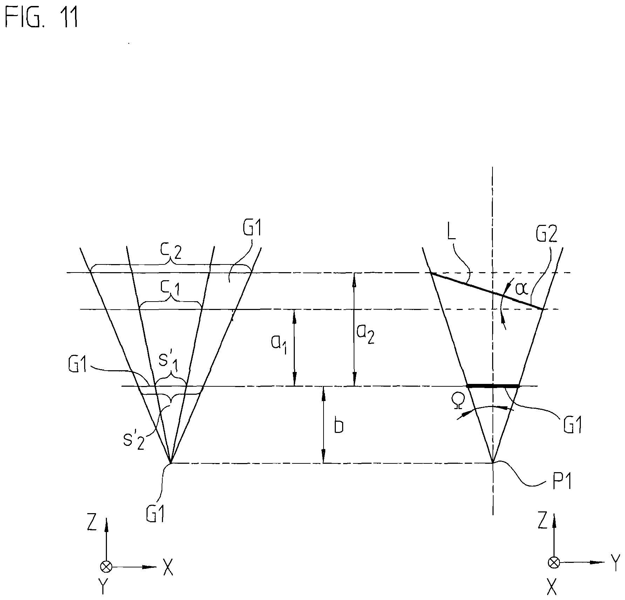

Eine fünfte Ausführungsform der erfindungsgemäßen optischen Positionsmesseinrichtung sei abschließend anhand der Figur 11 beschrieben, die wiederum schematisierte Darstellungen derselben analog zu den bisherigen Beispielen zeigt.

In den vorangegangenen Ausführungsbeispielen war jeweils vorgesehen, dass eine Maßverkörperung sich entlang einer ersten Geraden oder aber entlang einer ersten gekrümmten Linie erstreckt; die Detektoranordnung hingegen war jeweils entlang einer zweiten Linie angeordnet, die entweder gekrümmt oder aber geradlinig war. Über das definierte Verkippen der Detektionsebene konnte das aus einer Linear-Maßverkörperung resultierende Streifenmuster in ein winkliges Streifenmuster transformiert werden oder aber das aus einer Winkel-Maßverkörperung resultierende winklige Streifenmuster in ein paralleles Streifenmuster.

Im Rahmen der vorliegenden Erfindung ist darüber hinaus noch möglich, ein Streifenmuster aus der Abtastung einer Winkel-Maßverkörperung in ein modifiziertes winkliges Streifenmuster zu transformieren. Dies bedeutet, dass sich die Krümmung der zweiten Linie, entlang der sich die Detektoranordnung erstreckt, von der Krümmung der ersten gekrümmten Linie unterscheidet, entlang der sich die Winkel-Maßverkörperung erstreckt. Dieser Fall ergibt sich beispielsweise ganz konkret dann, wenn ein Opto-ASIC mit einer Detektoranordnung für die Abtastung einer ersten Winkelmaßverkörperung mit einem ersten Durchmesser auch für die Abtastung einer zweiten Winkelmaßverkörperung mit einem zweiten Durchmesser verwendet werden soll und sich die beiden Durchmesser unterscheiden. Auch in diesem Fall kann durch geeignetes Verkippen der Detektionsebene um den Verkippwinkel $\alpha$ erfindungsgemäß die gewünschte Transformation erfolgen.

Anhand der Figur 11 sowie unter Bezugnahme auf die Figur 10 seien nachfolgend maßgebliche Überlegungen bzgl. dieser Ausführungsform der erfindungsgemäßen optischen Positionsmesseinrichtung erläutert.

Im Fall einer derartigen Ausführungsform der erfindungsgemäßen optischen Positionsmesseinrichtung sind üblicherweise die Größen $c_1$, $c_2$ und L der Detektoranordnung vorgegeben.

Wie in den vorangehenden Ausführungsbeispielen kann man den Verkippwinkel $\alpha$ bei Kenntnis von $a_2$, $a_1$ und L gemäß der bereits oben erwähnten Gleichung 3.3 direkt bestimmen:

$$\sin\alpha = \frac{a_2 - a_1}{L} \qquad \text{(Gl. 3.3)}$$

Eine weitere vorgegebene Größe kann die Bauhöhe der Abtasteinheit der erfindungsgemäßen optischen Positionsmesseinrichtung sein. Diese ist durch die Parameter b und $a_1$ oder $a_2$ festgelegt. Aufgrund des Strahlensatzes gilt nun für den vorliegenden Fall:

$$\frac{c_i}{s'_i} = \frac{a_i + b}{b} \Rightarrow s'_i = \frac{b \cdot c_i}{a_i + b} \qquad \text{(Gl. 6)}$$

für i=1,2.

Kennt man die beiden Größen $a_1$ und $a_2$, so kann man nun die Längen der Sehnen $s'_1$ und $s'_2$ der Bogenelemente eines Teilungsbereichs auf der inneren und äußeren Seite der abgetasteten Winkel-Maßverkörperung bestimmen.

Nachfolgend sei ein konkretes Zahlen-Beispiel für die fünfte Ausführungsform der erfindungsgemäßen optischen Positionsmesseinrichtung angegeben, für das die maßgeblichen Größen $\alpha$ sowie $s'_1$ und $s'_2$ mit den obigen Gleichungen 3.3 und 6 ermittelt wurden. Im konkreten Beispiel ist der Radius $R_M$ der abgetasteten Winkel-Maßverkörperung kleiner als der Radius $R_D$ der gekrümmten Detektoranordnung in der Detektionsebene.

Gegeben seien etwa:

$L = 2mm$
$a_1 = 1000\mu m$
$a_2 = 1.4mm$
$b = 4mm$
$c_1 = 220.893\mu m$
$c_2 = 245.437\mu m$

Die gesuchten Größen $\alpha$ sowie $s'_1$ und $s'_2$ betragen dann:

$s'_1 = 181.806\mu m$
$s'_2 = 176.714\mu m$
$\alpha = 11.54°$

Eine vorhandene, winklig orientierte Detektoranordnung eines Opto-ASICs, die ursprünglich für die Abtastung einer Winkel-Maßverkörperung mit einem ersten Radius $R_{M1}$ ausgelegt wurde und dessen Detektoranordnung entlang einer zweiten Linie mit dem der Krümmung zugehörigen Radius $R_D = R_{M1}$ angeordnet ist, kann demzufolge nunmehr auch zur Abtastung mindestens einer weiteren Winkel-Maßverkörperung mit einem zweiten Radius $R_{M2}$ genutzt werden; der erste und der zweite Radius $R_{M1}$, $R_{M2}$ unterscheiden sich hierbei.

Neben den konkret erläuterten Beispielen gibt es im Rahmen der vorliegenden Erfindung selbstverständlich noch vielfältige weitere Ausgestaltungsmöglichkeiten.

So kann natürlich auch das vierte und fünfte Ausführungsbeispiel der erfindungsgemäßen optischen Positionsmesseinrichtung analog zum zweiten und dritten Ausführungsbeispiel abgewandelt werden. Das bedeutet, dass auch beim vierten und fünften Ausführungsbeispiel die Beleuchtungsrichtung lotrecht oder nicht-lotrecht bzgl. der jeweiligen Maßverkörperung orientiert sein kann. Ferner können auch das vierte und fünfte Ausführungsbeispiel der erfindüngsgemäßen optischen Positionsmesseinrichtung als Auflicht-Konfiguration mit einer abgetasteten Reflexions-Maßverkörperung ausgebildet werden etc..

Ferner sei darauf hingewiesen, dass die in der Beschreibung der Ausführungsbeispiele erwähnte Teilungsperiode d grundsätzlich als Breite in Messrichtung x eines beliebigen, vorzugsweise rechteckförmigen, Teilbereichs der jeweiligen Maßverkörperung zu verstehen ist. Die Kanten dieses Teilbereichs verlaufen hierbei in Messrichtung x und in Strichrichtung y.

Desweiteren sei erwähnt, dass die verschiedenen Gleichungen aus der vorhergehenden Beschreibung letztlich nur eine angenäherte Beschreibung der vorliegenden Erfindung darstellen. So ist darauf hinzuweisen, dass für eine exakte Betrachtung desweiteren noch die Dispersion der durchleuchteten Glaselemente im Abtaststrahlengang zu berücksichtigen ist. Die verschiedenen Näherungen erlauben jedoch eine brauchbare Charakterisierung der verschiedenen Anwendungsfälle. Eine finale Optimierung der Relativanordnung der Detektionsebene gegenüber der Maßverkörperungsebene erfolgt während der Fertigung der entsprechenden Positionsmesseinrichtung beispielsweise dadurch, dass eine Verkippung dergestalt eingestellt wird, dass der Modulationsgrad der über die Mehrzahl von Detektorelementen erfassten Signale möglichst gleich ist.

Die oben diskutierten Fälle können ferner noch dahingehend erweitert werden, dass der Strahlengang ggf. durch weitere optische Elemente wie Spiegel oder Prismen abgelenkt bzw. umgelenkt wird, bevor das Licht auf die Detektoranordnung trifft. Diese optischen Elemente können zum Beispiel zwischen der Detektoranordnung und der Maßverkörperung angeordnet sein oder auch zwischen der Maßverkörperung und der Lichtquelle. Je nach Art des optischen Elements sind Anpassungen in der Position und Ausrichtung der Detektionsebene hinsichtlich der Maßverkörperungsebene vorzunehmen.

Das der vorliegenden Erfindung zugrundeliegende Konzept funktioniert grds. auch bei Verwendung einer konvergentem Beleuchtung anstelle einer divergenten Beleuchtung. Eine konvergente Beleuchtung kann beispielsweise durch eine Beleuchtungseinheit, bestehend aus einer Lichtquelle und einer Sammellinse, realisiert werden. Hierbei sollte die Lichtquelle einen Abstand zur bildseitigen Linsenhauptachse haben, der größer ist als die zugehörige Linsenbrennweite. Ähnliche Zusammenhänge und Beziehungen wie die für den weiter oben vorrangig diskutierten Fall mit divergenter Beleuchtung lassen sich auch für den Fall mit konvergenter Beleuchtung herleiten.

**Patentansprüche**

**1.**    Optische Positionsmesseinrichtung zur Erfassung der Relativposition einer Abtasteinheit sowie einer hierzu in der Maßverkörperungsebene (10) angeordneten und mindestens in einer Messrichtung (x) beweglichen Maßverkörperung (23), die sich entlang einer ersten Geraden erstreckt,

- wobei die Abtasteinheit genau eine punktförmige Lichtquelle (23) ohne vorgeordnetes Index-Gitter sowie eine in einer Detektionsebene (20) angeordnete und sich entlang einer zweiten Linie erstreckende Detektoranordnung (21) umfasst, deren Krümmung verschieden von der ersten Geraden ist und

- wobei eine Transformation eines aus der Abtastung der Maßverkörperung resultierenden Streifenmusters in ein sich entlang der zweiten Linie erstreckendes Streifenmuster erfolgt, indem zur Transformation die Maßverkörperungsebene (10) und die Detektionsebene (20) nichtparallel zueinander angeordnet sind und

- wobei die Maßverkörperung (11) als Linear-Maßverkörperung ausgebildet ist, die sich entlang der ersten Geraden erstreckt und die Detektoranordnung (21) sich entlang der gekrümmten zweiten Linie erstreckt, so dass eine Transformation eines aus der Abtastung der Linear-Maßverkörperung resultierenden Streifenmusters in ein sich entlang der gekrümmten zweiten Linie erstreckendes Streifenmuster erfolgt und

- wobei die Detektionsebene (20) gegenüber der Maßverkörperungsebene (10) um einen definierten Verkippwinkel ($\alpha$) verkippt angeordnet ist, wobei der Verkippwinkel ($\alpha$) als Winkel zwischen der tatsächlichen Detektionsebene (20) und einer Ebene (20') definiert ist, in der die Detektionsebene (20) parallel zur Maßverkörperungsebene (10) angeordnet wäre und

- wobei sich der Verkippwinkel ($\alpha$) aus der Beziehung

$$\sin\alpha = \frac{a_2 - a_1}{L}$$

ergibt, mit:

$\alpha$ : Verkippwinkel

$a_1$ := lotrechter Abstand von der der Maßverkörperung nächstgelegenen Kante der Detektoranordnung auf die Maßverkörperungsebene

$a_2$ := lotrechter Abstand von der der Maßverkörperung am weitesten entfernten Kante der Detektoranordnung auf die Maßverkörperungsebene

L := Ausdehnung der Detektoranordnung senkrecht zur Messrichtung und

- wobei sich bei einer vorgegebenen Geometrie und Anordnung der Detektoranordnung (21) die Teilungsperiode (d) der Linear-Maßverkörperung (11) gemäß

$$d = b \cdot \frac{c_2}{b + a_2}$$

ergibt, mit:

d := Teilungsperiode der Linear-Maßverkörperung

b := Abstand der Lichtquelle lotrecht auf die Linear-Maßverkörperung

$c_2$ := Ausdehnung in Messrichtung der von der Lichtquelle am weitesten entfernt liegenden Kante eines zu einem Teilungsbereich zugehörigen Bereichs auf der Detektoranordnung

$a_2$ := lotrechter Abstand von der der Linear-Maßverkörperung am weitest entfernten Kante der Detektoranordnung auf die Maßverkörperungsebene und

- wobei sich der lotrechte Abstand ($a_1$) von der der Linear-Maßverkörperung (11) nächstgelegenen Kante der Detektoranordnung (21) auf die Maßverkörperungsebene (10) bei einer vorgegebenen Geometrie und Anordnung der Detektoranordnung (21) gemäß

$$a_1 = b \cdot \frac{c_1}{d} - b$$

ergibt, mit:

$a_1$ := lotrechter Abstand von der der Linear-Maßverkörperung nächstgelegenen Kante der Detektoranordnung auf die Maßverkörperungsebene

b := Abstand der Lichtquelle lotrecht auf die Linear-Maßverkörperung

$c_1$ := Ausdehnung in Messrichtung der der Lichtquelle am nächsten benachbarten Kante eines zu einem Teilungsbereich zugehörigen Bereichs der Detektoranordnung

d := Teilungsperiode der Linear-Maßverkörperung und

- wobei die Detektoranordnung (21) eine Mehrzahl einzelner, identisch ausgebildeter Detektorelemente (21.1) umfasst, welche entlang der zweiten Linie periodisch angeordnet sind.

**2.** Optische Positionsmesseinrichtung nach Anspruch 1, wobei die Lichtquelle derart angeordnet ist, dass ein von der Lichtquelle (23) emittierter Zentralstrahl lotrecht auf die Maßverkörperung (11) auftrifft.

**3.** Optische Positionsmesseinrichtung nach Anspruch 1, wobei die Lichtquelle derart angeordnet ist, dass ein von der Lichtquelle (23) emittierter Zentralstrahl nicht-lotrecht auf die Maßverkörperung (11) auftrifft.

**4.** Optische Positionsmesseinrichtung nach Anspruch 1, wobei die Maßverkörperungsebene (10) und die Detektionsebene (20) dergestalt nicht-parallel zueinander angeordnet sind, dass der Modulationsgrad der über die Mehrzahl von Detektorelementen (21.1) erfassten Signale möglichst gleich ist.

**5.** Optische Positionsmesseinrichtung nach Anspruch 1, wobei die Lichtquelle (23) ein divergentes Lichtbündel emittiert.

**6.** Optische Positionsmesseinrichtung nach Anspruch 1, wobei die Maßverkörperung (11) als Durchlicht-Maßverkörperung ausgebildet ist.

**7.** Optische Positionsmesseinrichtung nach Anspruch 1, wobei die Maßverkörperung (11) als Reflexions-Maßverkörperung ausgebildet ist.

**Claims**

**1.** Optical position measuring device for capturing the relative position of a scanning unit and a material measure (23) which is arranged in the material measure plane (10), movable at least in one measuring direction (x) and extends along a first straight line,

- wherein the scanning unit comprises exactly one punctiform light source (23) without an index grating arranged in front thereof and a detector arrangement (21) which is arranged in a detection plane (20) and extends along a second line, the curvature of which differs from the first straight line, and
- wherein a transformation of a strip pattern resulting from scanning the material measure into a strip pattern extending along the second line is carried out by virtue of, for transformation purposes, the material measure plane (10) and the detection plane (20) being arranged in a non-parallel manner in relation to one another, and
- wherein the material measure (11) is embodied as a linear material measure which extends along the first straight line and the detector arrangement (21) extends along the curved second line such that there is a transformation of a strip pattern resulting from scanning the linear material measure into a strip pattern extending along the curved second line, and
- wherein the detection plane (20) is arranged tilted by a defined tilt angle ($\alpha$) in relation to the material measure plane (10), wherein the tilt angle ($\alpha$) is defined as the angle between the actual detection plane (20) and a plane (20') in which the detection plane (20) would be arranged parallel to the material measure plane (10), and
- wherein the tilt angle ($\alpha$) emerges from the relationship

$$\sin \alpha = \frac{a_2 - a_1}{L},$$

where:

$\alpha$ := tilt angle,

$a_1$ := perpendicular distance between the edge of the detector arrangement closest to the material measure and the material measure plane,

$a_2$ := perpendicular distance between the edge of the detector arrangement furthest away from the material measure and the material measure plane,

L := extent of the detector arrangement perpendicular to the measuring device, and

- wherein, in the case of a predetermined geometry and arrangement of the detector arrangement (21), the graduation period (d) of the linear material measure (11) emerges according to

$$d = b \cdot \frac{c_2}{b + a_2} \, ,$$

where:

d := graduation period of the linear material measure,

b := perpendicular distance between the light source and the linear material measure,

$c_2$ := extent in the measuring direction of the edge, furthest away from the light source, of a region on the detector arrangement belonging to a graduation region,

$a_2$ := perpendicular distance between the edge, furthest away from the linear material measure, of the detector arrangement and the material measure plane, and

- wherein, in the case of a predetermined geometry and arrangement of the detector arrangement (21), the perpendicular distance ($a_1$) between the edge closest to the linear material measure (11) of the detector arrangement (21) and the material measure plane (10) emerges according to

$$a_1 = b \cdot \frac{c_1}{d} - b \, ,$$

where:

$a_1$ := perpendicular distance between the edge closest to the linear material measure of the detector arrangement and the material measure plane,

b := perpendicular distance between the light source and the linear material measure,

$c_1$ := extent in the measuring direction of the edge closest the light source of a region on the detector arrangement belonging to a graduation region,

d := graduation period of the linear material measure, and

- wherein the detector arrangement (21) comprises a multiplicity of individual detector elements (21.1) with an identical embodiment, which detector elements are arranged periodically along the second line.

2. Optical position measuring device according to Claim 1, wherein the light source is arranged in such a way that a central ray emitted by the light source (23) is incident on the material measure (11) in perpendicular fashion.

3. Optical position measuring device according to Claim 1, wherein the light source is arranged in such a way that a central ray emitted by the light source (23) is incident on the material measure (11) in non-perpendicular fashion.

4. Optical position measuring device according to Claim 1, wherein the material measure plane (10) and the detection plane (20) are arranged in non-parallel fashion in relation to one another in such a way that the degree of modulation of the signals captured over the multiplicity of detector elements (21.1) is as equal as possible.

5. Optical position measuring device according to Claim 1, wherein the light source (23) emits a divergent light beam.

6. Optical position measuring device according to Claim 1, wherein the material measure (11) is embodied as transmitted light material measure.

7. Optical position measuring device according to Claim 1, wherein the material measure (11) is embodied as reflection material measure.

**Revendications**

1.  Dispositif de mesure de position optique destiné à détecter la position relative d'une unité de balayage ainsi que d'un étalon (23) disposé dans le plan étalon (10) et mobile dans au moins une direction de mesure (x), lequel étalon s'étend le long d'une première droite,
dans lequel l'unité de balayage comprend exactement une source lumineuse ponctuelle (23) sans réseau de diffraction d'indice disposé en amont ainsi qu'un système de détection (21) disposé dans le plan de détection (20) et s'étendant le long d'une deuxième ligne dont la courbure est différente de la première droite, et

    - dans lequel une transformation d'un motif de bandes résultant du balayage de l'étalon est effectuée selon un motif s'étendant le long de la deuxième ligne en faisant en sorte que le plan étalon (10) et le plan de détection (20) soient disposés de manière non parallèle l'un à l'autre pour la transformation, et
    - dans lequel l'étalon (11) est réalisé sous la forme d'un étalon linéaire qui s'étend le long de la première droite et le système de détection (21) s'étend le long de la deuxième ligne incurvée de manière à ce qu'une transformation d'un motif de bandes résultant du balayage de l'étalon linéaire soit effectuée selon un motif de bandes s'étendant le long de la deuxième ligne incurvée, et
    - dans lequel le plan de détection (20) est disposé de manière inclinée par rapport au plan étalon (10) d'un angle d'inclinaison ($\alpha$) défini, dans lequel l'angle d'inclinaison ($\alpha$) est défini comme étant l'angle formé entre le plan de détection (20) effectif et un plan (20') pour lequel le plan de détection (20) serait disposé parallèlement au plan étalon (10), et
    - dans lequel l'angle d'inclinaison ($\alpha$) est déterminé par l'équation :

$$\sin\alpha = \frac{a_2 - a_1}{L}$$

avec :

    $\alpha$ : angle d'inclinaison,
    $a_1$ : distance verticale de l'arête du système de détection la plus proche de l'étalon sur le plan étalon,
    $a_2$ : distance verticale de l'arête du système de détection la plus éloignée de l'étalon sur le plan étalon,
    L : extension du système de détection perpendiculairement à la direction de mesure, et

    - dans lequel la période de division (d) de l'étalon linéaire (11), pour une géométrie et un agencement prédéterminés du système de détection (21), est déterminée conformément à :

$$d = b \cdot \frac{c_2}{b + a_2}$$

avec :

    d : période de division de l'étalon linéaire,
    b : distance de la source lumineuse perpendiculairement à l'étalon linéaire,
    $c_2$ : extension dans la direction de mesure de l'arête la plus éloignée de la source lumineuse d'une région appartenant à la plage de division sur le système de détection,
    $a_2$ : distance verticale de l'étalon linéaire au niveau de l'arête la plus éloignée du système de détection sur le plan étalon, et

    - dans lequel la distance verticale ($a_1$) de l'arête du système de détection (21) la plus proche de l'étalon (11) sur le plan étalon (10), pour une géométrie et un agencement prédéterminés du système de détection (21), est déterminée par :

$$a_1 = b \cdot \frac{c_1}{d} - b$$

avec :

$a_1$ : distance verticale de l'arête du système de détection la plus proche de l'étalon linéaire sur le plan étalon,
b : distance de la source lumineuse perpendiculairement à l'étalon linéaire,
$c_1$ : extension dans la direction de mesure de l'arête la plus proche de la source lumineuse d'une région du système de détection qui appartient à une plage de division,
d : période de division de l'étalon linéaire, et

- dans lequel le système de détection (21) comprend une pluralité d'éléments détecteurs (21.1) individuels réalisés de manière identique, qui sont disposés périodiquement le long de la deuxième ligne.

2. Dispositif de mesure de position optique selon la revendication 1, dans lequel la source lumineuse est disposée de manière à ce qu'un rayon central émis par la source lumineuse (23) soit incident perpendiculairement à l'étalon (11).

3. Dispositif de mesure de position optique selon la revendication 1, dans lequel la source lumineuse est disposée de manière à ce qu'un rayon central émis par la source lumineuse (23) soit incident de manière non perpendiculaire à l'étalon (11).

4. Dispositif de mesure de position optique selon la revendication 1, dans lequel le plan étalon (10) et le plan de détection (20) sont agencés de manière non parallèle l'un à l'autre afin que le degré de modulation des signaux détectés par l'intermédiaire de la pluralité d'éléments détecteurs (21.1) soit aussi constant que possible.

5. Dispositif de mesure de position optique selon la revendication 1, dans lequel la source lumineuse (23) émet un faisceau lumineux divergent.

6. Dispositif de mesure de position optique selon la revendication 1, dans lequel l'étalon (11) est réalisé sous la forme d'un étalon de transmission.

7. Dispositif de mesure de position optique selon la revendication 1, dans lequel l'étalon (11) est réalisé sous la forme d'un étalon de réflexion.

FIG. 1

FIG. 2

FIG. 3

FIG. 4

FIG. 5

FIG. 6

FIG. 7

FIG. 8

FIG. 9

FIG. 10

FIG. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 801724 B1
- EP 1477774 A1
- WO 2007129022 A1
- EP 0096448 A